# EUROPEAN PATENT SPECIFICATION

(11) **EP 0 461 781 B1**
(45) Date of publication and mention of the grant of the patent: **30.03.1994**
(21) Application number: 91304848.4
(22) Date of filing: 29.05.1991
(51) Int. Cl.: F28F 1/16, F24H 1/40, F24H 8/00

(54) **Heat exchanger**
Wärmetauscher
Echangeur de chaleur

(30) Priority: 31.05.1990 GB 9012080
(43) Date of publication of application: 18.12.1991
(73) Proprietor: SERVOTOMIC LIMITED, High Wycombe, Buckinghamshire HP12 3TA (GB)
(72) Inventor: Bellamy, Peter Nigel "Meadowside", Bucks HP13 5TT (GB)
(74) Representative: Howden, Christopher Andrew

(56) References cited:
- EP-A- 0 133 039
- US-A- 3 205 563
- US-A- 3 540 530
- PATENT ABSTRACTS OF JAPAN vol. 7, no. 169 (M-231)(1314) July 26, 1983& JP-A-58 72 888 (ASAHI TEKKOSHO K.K. ) April 30, 1983

## Description

The invention is concerned with heat exchangers for so-called "condensing boilers", for example for central heating systems comprising the features according to the precharacterising part of claim 1.

Such a heat exchanger is disclosed in EP-A-0 133 039, showing a heating boiler in which a plurality of water tubes extend over a burner assembly. Each of the water tubes comprises a length of an extrusion providing a cylindrical bore for passage of water and a plurality of longitudinally extending fins which in cross-section through the tubes, extend parallel with one another.

JP-A-5 872 888 discloses a radiator in which a radiator plate has a formation with a U-shaped section providing a longitudinal groove in which a pipe for hot water is packed by aluminium packing held in place by a finned convection plate mounted on the grooved body.

It is an object of the invention to provide a heat exchanger which can be manufactured more economically than known heat exchangers of comparable performance.

According to the invention, there is provided a heat exchanger comprising a plurality of heat exchange members, each comprising a length of an extrusion of heat conducting material, said extrusion having a first part affording a longitudinal passage through the extrusion, and a plurality of longitudinally extending fins connected directly or indirectly with said first part and comprising a plurality of fins or fin parts which, in cross-section through the extrusion, extend in a common direction, generally parallel with one another, to their free edges, characterised in that at least one of said heat exchange members has said parallel fins or fin parts interleaved with said parallel fins or fin parts of another of said heat exchange members, with the interleaved fins or fin parts of the two heat exchange members extending in opposite directions towards their free edges and each said fin of either heat exchange member being spaced from the ajoining fins of the other heat exchange member, whereby there is defined between the interleaved fins or fin parts of the two members a tortuous or meandering passage via which a fluid can pass through the heat exchanger in thermal contact with the heat exchange members.

An embodiment of the invention is described below by way of example with reference to the accompanying drawings in which:
FIGURE 1 is a fragmentary perspective view showing an extrusion forming part of a heat exchanger embodying the invention,
FIGURE 2 is a cross-sectional view of the extrusion of Figure 1,
FIGURE 3 illustrates a portion of a heat exchanger embodying the invention incorporating extrusions of the cross-section shown in Figures 1 and 2;
FIGURES 4 and 4a are respectively an elevation view and a side view of a cover plate forming part of the heat exchanger,
FIGURE 5 is a diagrammatic front view, with the outer cover removed, of a central heating boiler incorporating a heat exchanger embodying the invention; and
FIGURE 6 is a diagrammatic side view, in vertical section, of the boiler of Figure 5, and
FIGURE 7 is an exploded perspective view showing the arrangement of liner tubes within a heat exchanger embodying the invention.

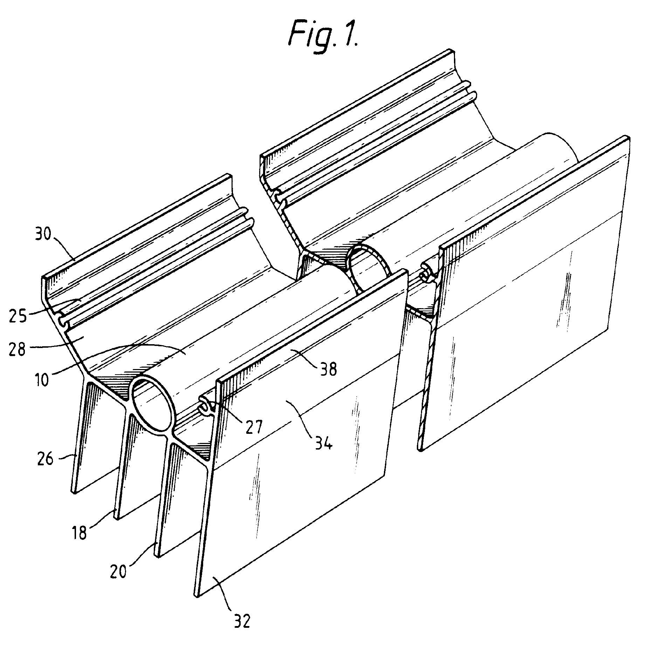

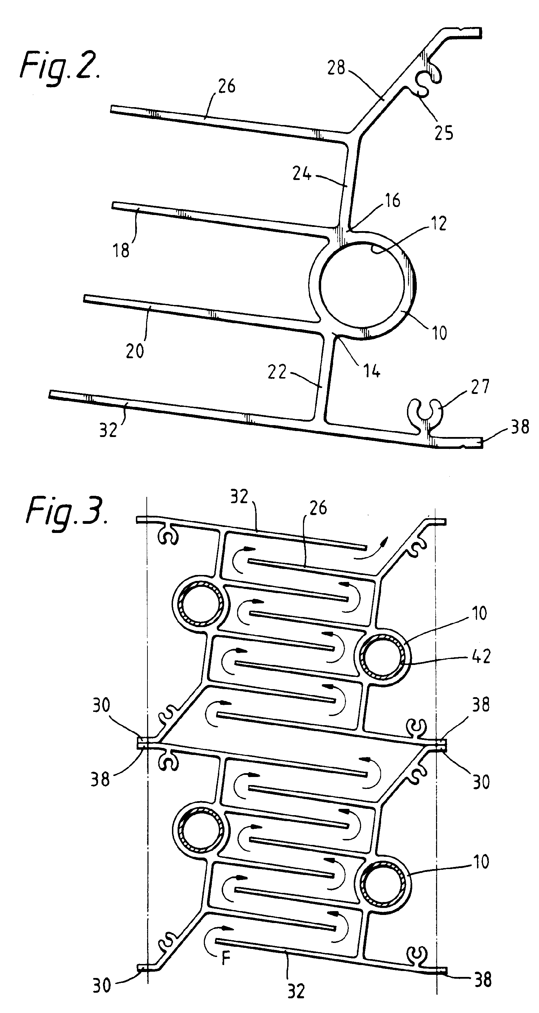

Referring to Figures 1 and 2, a heat exchanger embodying the invention utilises a plurality of heat exchange members each comprising a respective length cut from an extrusion of the cross-sectional shape shown in Figures 1 and 2. Thus, the extrusion affords a cylindrical or tubular first part 10 affording a cylindrical bore 12 extending longitudinally through the extrusion and a system of fins and webs extending from the wall of the portion 10 on the exterior thereof. Thus, from thickened transition regions 14,16 at spaced-apart positions around the tubular part 10 extend respectively a fin 18,20 and a root web 22,24. The root webs 22 and 24 are substantially co-planar, extending in opposite directions from their respective regions 14,16, whilst the fins 18,20 extend in generally parallel planes perpendicular to the plane of webs 22,24. The fins 18,20 extend away from the part 10 towards their free edges. The web 22 terminates, remote from the member 10, in the junction between a further fin 26 and a web 28. The fin 26 extends parallel with the fins 18,20 and in the same direction as the latter. The web 28 is inclined at an obtuse angle with respect to the flange 22 and with respect to the fin 26 and terminates, remote from the flange 22, in a flange 30. The root web 24 extends from the member 10 to a junction between a fin 32 and a web 34. The fin 32 extends in the same direction as fins 18,20 and 26 and is parallel with these fins. The web 34 extends from web 24, substantially coplanar with the fin 32 but in the opposite direction from the fin 32. The web 34, at its free edge, terminates in a flange 38. Formations 25 and 27 on the sides, facing towards one another, of the web 28 and web 34 have the form of longitudinally slotted tubes and serve to receive screws extended longitudinally into such formation from the ends of the respective lengths of extrusion, to secure end plates as explained below.

As illustrated in Figure 3, a heat exchanger may be constructed using a plurality of equal lengths of the extrusion illustrated in Figures 1 and 2, the lengths, (also herein referred to as heat exchange members) being arranged in pairs of opposing members, as illustrated in Figure 3 with the fins 18,20,26,32 of one member being interleaved with the corresponding fins of the other, so that the fins of one member extend parallel with and are equally spaced from the adjacent fins of the other member but extend in opposite directions towards their free edges, which free edges are likewise spaced from the webs 22,24 and the member 10 of the opposing heat exchange member whereby there is defined, between the two sets of fins, a tortuous or meandering passage, indicated by the arrows F in Figure 3, for fluid flow.

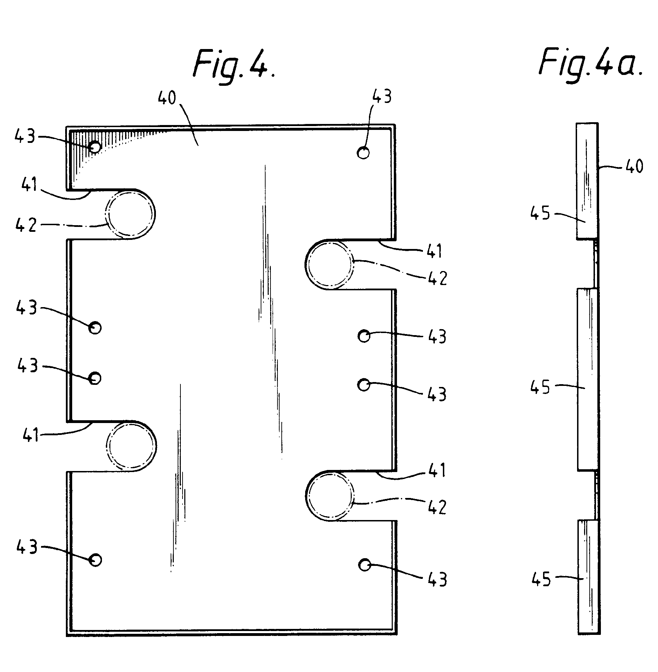

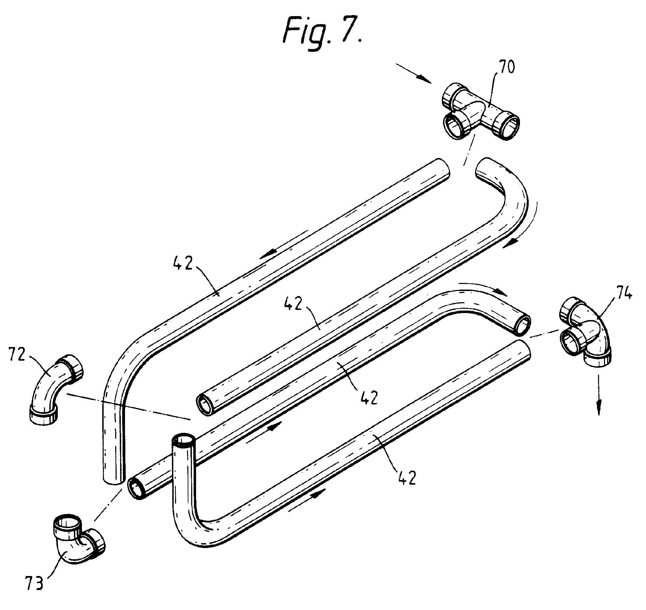

The above-noted meandering passage is bounded, at the sides thereof corresponding with the ends of the respective lengths of extrusion, by end plates 40 of the form shown in Figures 4 and 4a secured to the lengths of extrusion. Each end plate 40 is generally rectangular and is formed with an upper and a lower slot 41 extending into the plate from each vertical edge thereof, the inner ends of the slots 41 registering with the bores 12 in the heat exchange members. The bores 12 are interconnected by pipework or manifolds illustrated in Figure 7, whereby a water flow along the bores 12 may be established between an inlet and an outlet connection of the heat exchanger. As illustrated in Figure 3, a plurality of opposing pairs of heat exchange members may be stacked in series with, on each side of the heat exchanger, the flange 30 of one member being secured, for example by welding, to the flange 38 of the adjoining heat exchange member.

The heat exchange members are preferably of aluminium alloy. It will be understood that if in a circulating water central heating system in which the water can act as an electrolyte the aluminium was in direct contact with the water, there would be a risk of galvanic action between the aluminium and components, such as pipes, in the system, which are of other metals, such as copper. In order to avoid such galvanic action, each of the bores 12 is provided with a tightly fitting liner 42 of copper tubing, which projects beyond the ends of the respective extrusion, and thus through the respective slots 41 in the end plates 40. The width of each slot 41 corresponds to the external diameter of the liner tubes 42 and each slot 41 has a semi-circular end to fit closely with the adjoining part of the circumference of the respective tube 42, as indicated in broken lines in Figure 4. These projecting copper liners 42 also allow conventional pipe-fitting techniques to be used to connect the heat exchange members. However, it will be understood that the bores 12 may themselves form the conduits for a heat exchange fluid in situations where galvanic action is not significant (e.g. because the fluid in question is not an electrolyte, or because dissimilar metals are not used(. It will be noted that the root webs 24 of the extrusion lengths in the assembled heat exchanger are so disposed, in relation to the adjoining tubular parts 10, as to be closer to the opposing extrusion length than the axis of the respective part 10, thereby ensuring that the regions where the edges of the slots 41 are spaced from the peripheries of the tubes 42 are located reliably on the outside of the gas-flow passage defined between the opposing extrusion lengths. The provision of slots 41 instead of circular apertures, for example, facilitates assembly of the heat exchanger.

As shown in Figure 4a, each plate 41 is bounded by flanges 45 adapted to extend partly over the ends of the heat exchanger. It will be appreciated that the plates 40 at opposite ends of the heat exchanger are a mirror image of one another. The plates 41 are secured to the ends of the heat exchanger by self-tapping screws extended through holes 43 in the plates 41 and into the respective formations 25, 27.

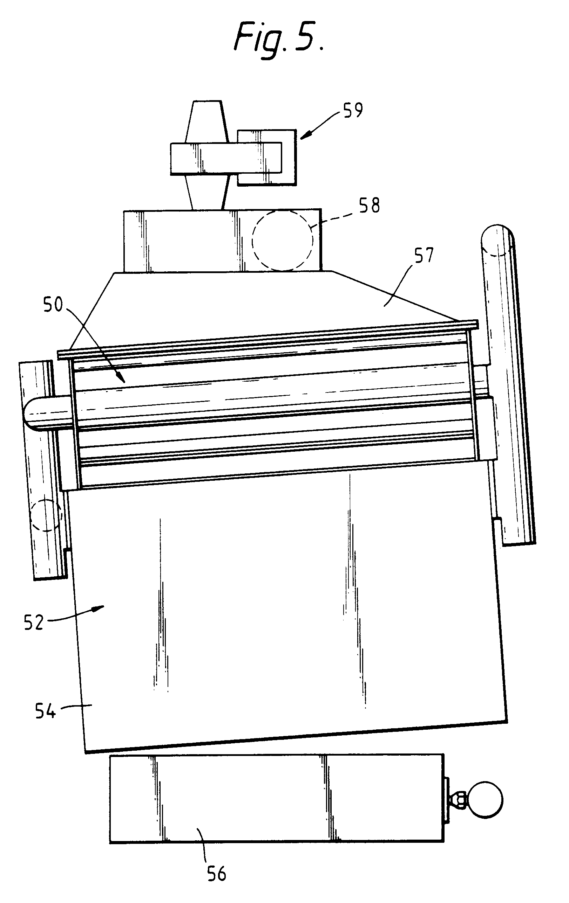

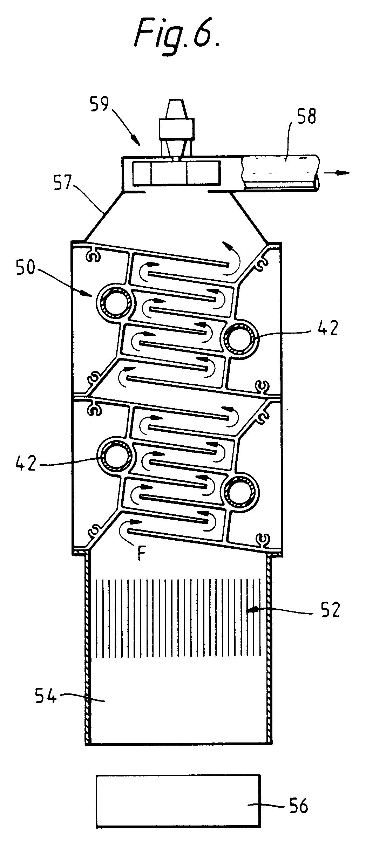

As illustrated in Figures 5 and 6, the heat exchanger described with reference to the drawings may be incorporated as a secondary heat exchanger (indicated at 50 in Figures 5 and 6) in a condensing gas boiler for a central heating system, the boiler having a conventional primary heat exchanger 52. Referring to Figures 5 and 6, the primary heat exchanger 52 is shown disposed directly above a combustion chamber 54 which contains the flame from a gas burner 56. The hot combustion gases pass upwards through the primary heat exchanger where most of the heat in the combustion gases is transferred to the water circulating in the water passages (not shown) of the primary heat exchanger. The combustion gases pass thence to the secondary heat exchanger 50 and pass through the tortuous passage F, delivering up further heat to the heat exchange members, and thus to the water passing through the liners 42 of the secondary heat exchanger 50. From the secondary heat exchanger 50, the exhaust gases pass, via a flue hood 57, to an exhaust flue 58. Flow of the combustion gases through the system is assisted by a fan 59 (or, in configurations in which the overall flow of combustion gases has no upward component, is entirely effected by fan 59). In the illustrated embodiment, the fan 59 is of the tangential kind. The water returning from the radiators of the central heating system passes through the liners 42 of the secondary heat exchanger 50 before passing to the primary heat exchanger 52 and thence to the radiators.

Figure 7 illustrates how the liner pipes 42 and the associated fittings may be configured and arranged, so that the return flow from the radiator passes via a T-piece 70, through the liners 42 of the upper pair of opposed extrusion lengths, then, via elbows 72,73 through the liners 42 of the lower pair of extrusion lengths, before passing, via a corner T-piece 74, to the primary heat exchanger. The extrusion lengths and other components are omitted in Figure 7 for clarity.

The combustion gases are sufficiently cooled in the secondary heat exchanger 50 to bring about condensation of water vapour in such gases, whereby the latent heat of condensation is recovered by the system. The inclination, with respect to the horizontal, of the individual fins of the secondary heat exchanger 50, as shown in Figure 6, and an inclination with respect to the horizontal of the longitudinal axes of the extrusions forming the secondary heat exchanger, as illustrated in Figure 5, ensure that the water condensed in the heat exchanger 50 from the combustion products will drain to a predetermined location in the secondary heat exchanger, from whence such water can pass to a drainage pipe (not shown).

## Claims

1. A heat exchanger comprising a plurality of heat exchange members, each comprising a length of an extrusion of heat conducting material, said extrusion having a first part (10) affording a longitudinal passage (12) through the extrusion, and a plurality of longitudinally extending fins (18-32) connected directly or indirectly with said first part (10) and comprising a plurality of fins or fin parts (18, 20, 22, 24) which, in cross-section through the extrusion, extend in a common direction, generally parallel with one another, to their free edges, characterised in that at least one of said heat exchange members has said parallel fins (18, 20, 26, 32) or fin parts interleaved with said parallel fins or fin parts of another of said heat exchange members, with the interleaved fins or fin parts (18, 20, 26, 32) of the two heat exchange members extending in opposite directions towards their free edges and each said fin of either heat exchange member being spaced from the adjoining fins of the other heat exchange member, whereby there is defined between the interleaved fins or fin parts of the two members a tortuous or meandering passage via which a fluid can pass through the heat exchanger in thermal contact with the heat exchange members.

2. A heat exchanger according to Claim 1 wherein said longitudinal passages (12) receive as a close fit a pipe or conduit (42) for a fluid.

3. The use of a heat exchanger according to Claim 1 in a condensing boiler.

## Patentansprüche

1. Wärmetauscher, umfassend eine Anzahl von Wärmetauscherelementen, die jeweils einen Längenabschnitt eines Strangpreßprofils aus wärmeleitendem Material umfassen, wobei das Strangpreßprofil einen ersten Teil (10) hat, der einen Durchgang (12) in Längsrichtung durch das Strangpreßprofil bietet, und eine Anzahl sich in Längsrichtung erstreckender Rippen (18-32), die direkt oder indirekt mit dem ersten Teil (10) verbunden sind und eine Anzahl von Rippen oder Rippenteilen (18, 20, 22, 24) umfassen, die sich im Querschnitt durch das Strangpreßprofil in einer gemeinsamen Richtung im allgemeinen parallel zueinander zu ihren freien Rändern hin erstrecken, dadurch gekennzeichnet, daß die parallelen Rippen (18, 20, 26, 32) oder Rippenteile wenigstens eines der besagten Wärmetauscherelemente mit den besagten Rippen oder Rippenteilen (18, 20, 26, 32) eines anderen der besagten Wärmetauscherelemente alternierend angeordnet sind, wobei die alternierenden Rippen oder Rippenteile (18, 20, 26, 32) der beiden Wärmetauscherelemente sich in entgegengesetzten Richtungen zu ihren freien Rändern hin erstrecken und jede besagte Rippe eines jeden Wärmetauscherelements von den benachbarten Rippen des anderen Wärmetauscherelements einen Abstand aufweist, wodurch zwischen den alternierenden Rippen oder Rippenteilen der beiden Elemente ein gewundener oder mäandrierender Durchgang festgelegt wird, durch den ein Fluid in thermischem Kontakt mit den Wärmetauscherelementen durch den Wärmetauscher hindurchtreten kann.

2. Wärmetauscher nach Anspruch 1, dadurch gekennzeichnet, daß die Längsdurchgänge (12) ein Rohr oder eine Leitung (42) für ein Fluid als enge Passung aufnehmen.

3. Verwendung eines Wärmetauschers nach Anspruch 1 in einem Kondensationsheizkessel.

## Revendications

1. Echangeur de chaleur comprenant une pluralité d'éléments d'échange thermique, comprenant chacun une certaine longueur d'extrudé en matériau thermo-conducteur, ledit extrudé présentant une première partie (10) qui offre un passage longitudinal (12) à travers l'extrudé et une pluralité d'ailettes (18-32) s'étendant longitudinalement, reliées directement ou indirectement avec ladite première partie (10) et comprenant une pluralité d'ailettes ou de parties d'ailettes (18, 20, 22, 24) qui, vues en coupe à travers l'extrudé, s'étendent dans une direction commune, généralement parallèles les unes aux autres, jusqu'à leurs bords libres, **caractérisé** en ce que l'un au moins desdits éléments d'échange thermique a lesdites ailettes ou parties d'ailettes parallèles (18, 20, 26, 32) qui sont entrecroisées avec lesdites ailettes ou parties d'ailettes parallèles d'un autre élément d'échange thermique, les ailettes ou parties d'ailettes entrecroisées (18, 20, 26, 32) des deux éléments d'échange thermique s'étendant dans des directions opposées vers leurs bords libres et chacune desdites ailettes d'un élément d'échange thermique étant espacée des ailettes adjacentes de l'autre élément d'échange thermique de sorte qu'est défini entre les ailettes ou parties d'ailettes entrecroisées des deux éléments un passage tortueux ou en méandres par lequel un liquide peut traverser l'échangeur de chaleur en étant en contact thermique avec les éléments d'échange thermique.

2. Echangeur de chaleur selon la revendication 1, dans lequel lesdits passages longitudinaux (12) reçoivent un tube ou conduit (42) étroitement emboîté destiné à un fluide.

3. Utilisation d'un échangeur de chaleur conforme à la revendication 1 dans une chaudière à condensation.
